# EUROPEAN PATENT APPLICATION

(11) **EP 1 650 099 A1**
(43) Date of publication of application: **26.04.2006**
(21) Application number: 04025130.8
(22) Date of filing: 22.10.2004
(51) Int. Cl.: B62B 3/02

(54) **Auxiliary device for transporting children in an emergency**

(71) Applicant: LASA ESPANSI S.r.l., 10092 Beinasco (Torino) (IT)
(72) Inventor: Alesso, Andrea, 10043 Orbassano (IT)
(74) Representative: Quinterno, Giuseppe

(57) **Abstract**

An auxiliary device for transporting children comprises a movable support (1) mounted on a plurality of wheels (2) and a container (3) arranged fixedly on the support (1). The container (3) is formed by a plurality of shaped and coloured walls (3a, 3b, 3c, 3d, 3e) of substantially rigid foamed material arranged so as to form as a whole a box-shaped shock-absorbing casing capable of accommodating children, in which said walls (3a, 3b, 3c, 3d, 3e) are attached to each other by releasable attachment means (8). Means (5; 55, 56) are also provided for moving said device manually.

## Description

The present invention relates to rescue devices intended for use in buildings and environments for the reception of children, for example kindergartens, playschools, nurseries and similar.

In general, the number of assistants for the children in such buildings is markedly less than the number of children normally present. In emergency situations, for example fires, this means that evacuation of the premises is slowed down by the fact that many children, and in particular those not yet capable of walking quickly, have to be picked up and carried individually by these assistants.

Document US 4 723 784 discloses an emergency trolley having a plurality of apertures for carrying a number of children at the same time.

The purpose of this invention is to produce a device which can be used in such a manner that it is always easily available, and which in a simple and practical manner provides assistance for transporting children rapidly and easily in evacuation operations.

This purpose is achieved according to the invention by an auxiliary device for transporting children, having the characteristics defined in the claims.

As will be appreciated, a device according to the invention is always to hand since it can be used in normal conditions as an item of furniture or for play. Moreover, the fact that it is formed of detachable parts facilitates cleaning operations and simplifies repairs in case of damage by making it possible to replace only the damaged parts. This is particularly important where the device according to the invention is in fact also used as an item of furniture or for play, and is therefore always in contact with children.

Preferred but non-limiting forms of embodiment of the invention will now be described, with reference to the appended drawings, in which:
- figure 1 is a perspective view of an auxiliary device for transporting children according to the present invention;
- figure 2 is an exploded view of the device in figure 1;
- figure 3 is a perspective view of a variant of the device in figure 1; and
- figure 4 is an exploded view of part of the variant in figure 3.

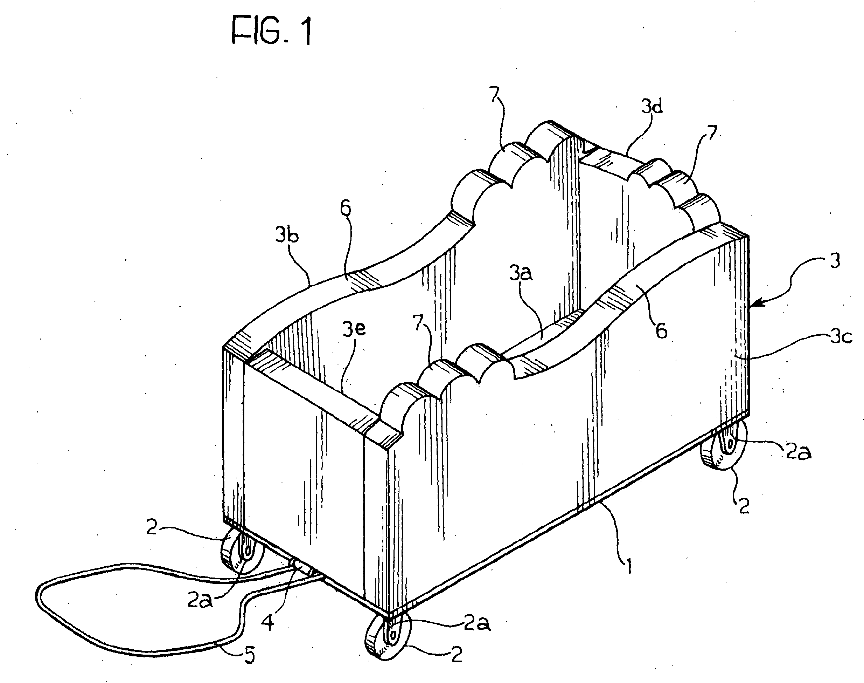

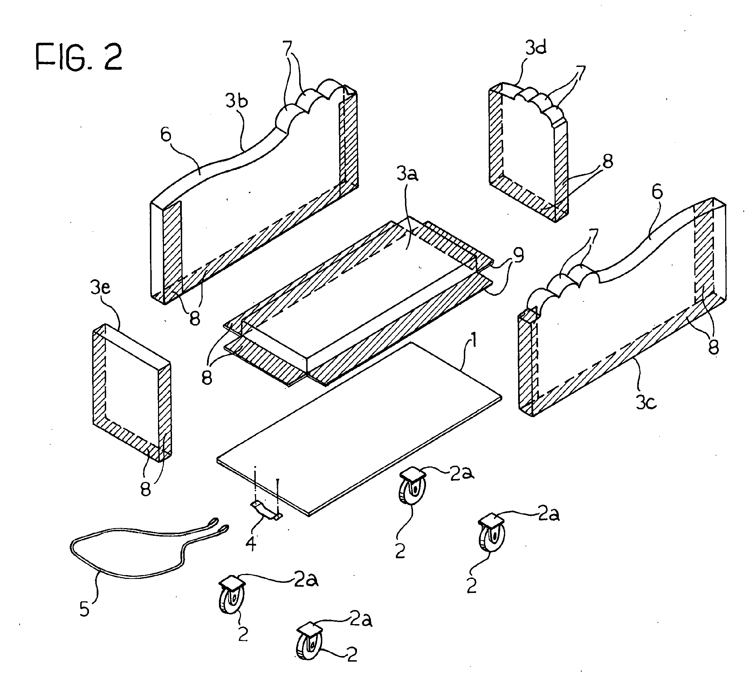

Figures 1 and 2 show an auxiliary device for transporting children according to the invention. This device basically comprises a load-carrying base panel 1, mounted on a plurality of wheels 2, onto which is firmly fitted a container 3 open at the top, so as to form a substantially trolley-like structure.

The base panel 1 is produced from highly fire-resistant material, for example of class 1IM according to the Italian standards relating to fire prevention (CSE RF 4/83, UNI 9175). Preferably, this panel 1 is composed of high-strength resin-bonded plywood, covered externally with a polyvinyl and polyamide laminate. The wheels 2 are fitted to the base panel 1 by means of respective forks 2a attached to the base panel 1 by through bolts with locknuts (not shown). Preferably, two of the wheels 2, that is the front ones in the preferred direction of movement of the trolley, are swivellable to rection of movement of the trolley, are swivellable to allow the trolley to be guided easily, after the manner of a shopping trolley, for example.

Also attached to the bottom of the panel 1, by means of screws (not shown) for example, is a plate 4 shaped so as to allow the attachment of a noose or cable 5 of fabric, for example, for pulling the trolley.

Fitted to the load-carrying panel 1 are a base wall 3a and side walls 3b, 3c, 3d, 3e which form the container 3. The walls 3a, 3b, 3c, 3d, 3e of the container 3 are formed from highly fire-resistant foamed material, for example of class 1IM according to the Italian standards. Preferably, these walls are of foamed polyurethane, having a density of 30 kg/m³, for example, covered externally with a polyvinyl and polyamide laminate.

The foamed material of the walls is sufficiently soft to deaden impacts against them, and is sufficiently rigid for them not to bend by their own weight. The walls are arranged so as to form as a whole a box-shaped shock-absorbing casing capable of accommodating children inside it.

The walls of the container 3 are also shaped and coloured, for example with wavy areas 6 and shaped portions 7 on their free edges, so that the trolley as a whole presents an aesthetically pleasing appearance. In this way, the device according to the invention may be used in normal conditions as an item of furniture or for play, thus remaining always available if an emergency situation should arise.

The walls 3a, 3b, 3c, 3d, 3e of the container 3 are produced separately, and then assembled in a non-permanent manner, so that they can be separated from each other if required, for example for cleaning or repairs.

To this end, the walls 3a, 3b, 3c, 3d, 3e have portions of surface provided with releasable attachment means 8 arranged integrally with the covering of these walls (represented in figure 2 by shaded areas with dashed lines). Still more preferably, these attachment means 8 are produced as instant fastening strips with micro-hooks, of the Velcro® type. The complementary strips of each pair of strips are arranged respectively on portions of surface facing each other in each joint area between two different walls. The base wall 3a is attached to the load-carrying panel 1, and has lateral extensions 9 on each side so that the length and width of the load-carrying panel 1 are equal respectively to the length and width of the base wall 3a plus the width of the respective lateral extensions 9. The attachment means 8 of the base wall 3a are arranged on these lateral extensions 9, so that the side walls 3b, 3c, 3d, 3e can be fitted from above downwards onto this base wall 3a. The lateral extensions 9 are produced as continuations of the covering of the base wall 3a.

According to a variant (not shown), a band is arranged to run round the side walls 3b, 3c, 3d, 3e so as to strengthen the connection between these walls. Preferably, this strip is also of foamed polyurethane covered externally with a polyvinyl and polyamide laminate.

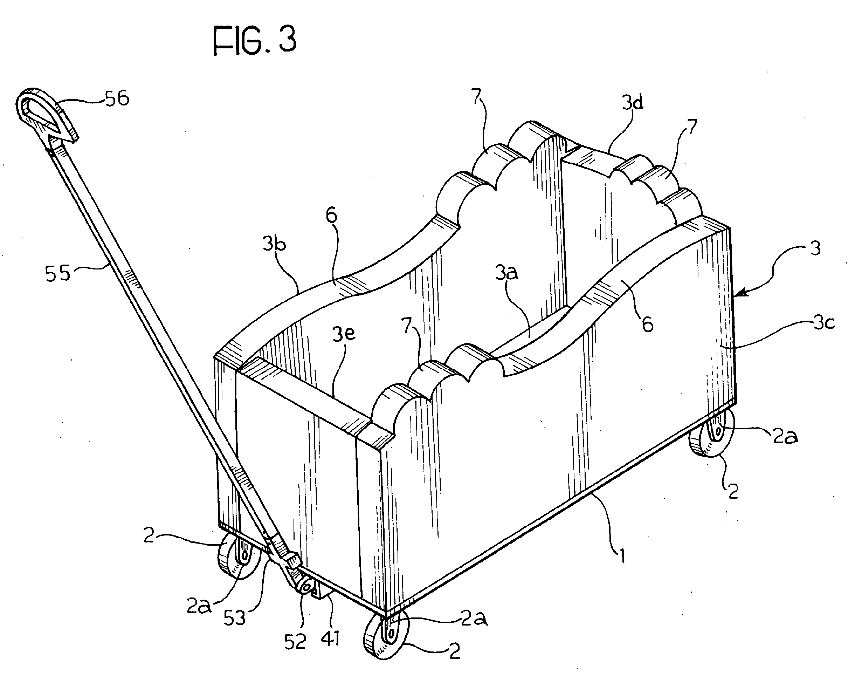

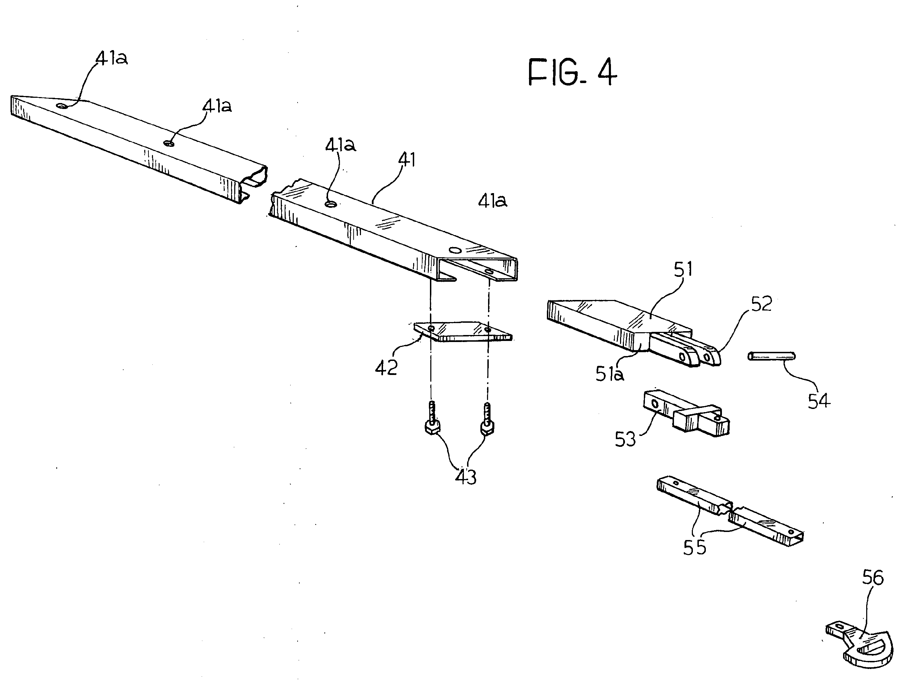

Figures 3 and 4 show an advantageous variant of the device according to the invention. In this variant, the components identical to those of the variant just outlined are indicated respectively by the same reference numbers, and will not be described further.

In this variant, the only difference consists in a different arrangement used for pulling the device. This arrangement provides for a C-section sheet metal channel 41, fitted to the underside of the base panel 1 with screws (not shown) passing through holes 41a made in one of the sides of the channel 41. At one of the ends of the channel 41 a metal plate 42 is fitted by means of through screws 43, so as to keep the flanges of the C-section channel 41 at a defined distance. Housed inside the channel 41 so as to be slidable longitudinally is a slide element 41 of polyamide which has at a front end a fork-shaped portion 52 to which is fitted swivellably a polyamide connecting piece 53, by means of a pin 54. At the opposite end, the connecting piece 53 is attached to an aluminium bar 55, at the distal end of which is fitted a polyamide handle 56.

In normal conditions, the slide element 51 is in an end-of-travel position inside the channel 41 at one end of this, the connecting piece 53 and the aluminium bar 55 being also situated inside the channel 41. Rotation of the bar 55 is therefore prevented. At the other end of the channel 41, only the handle 56 protrudes. Pulling the handle 56 causes the bar 55 and then the connecting piece 53 to emerge axially from the channel 41. Pulling the handle 56 further causes the fork-shaped portion 52 of the slide element 51 to emerge, and a shoulder surface 51a of this, coming up against the shanks of the screws 43, causes it to be locked in a second end-of-travel position. When this position is reached it is possible to rotate the bar 55 in a vertical plane, so as to reach a convenient position for pulling the trolley (see figure 3).

It should be understood that the invention is not limited to the embodiments described and illustrated here, which are to be considered as examples of embodiment of the auxiliary device for transporting children; on the contrary, the invention is capable of being modified as regards the form and arrangement of parts, details of construction and operation. For example, the container 3 may have a form other than that of a parallelepiped, for example a cylinder or prism, or the load bearing panel 1 and the base wall 3a may be integrated into a single part, according to the numerous possible variants which may appear appropriate to persons skilled in the art, and which are to be understood as falling within the scope of the invention, as defined by the following claims.

## Claims

1. An auxiliary device for transporting children, **characterised in that** it comprises a movable support (1) mounted on a plurality of wheels (2) and a container (3) fixedly arranged on said support (1) and formed by a plurality of shaped and coloured walls (3a, 3b, 3c, 3d, 3e) of substantially rigid foamed material arranged so as to form as a whole a box-shaped shock-absorbing casing capable of accommodating children, in which said walls (3a, 3b, 3c, 3d, 3e) are attached to each other by releasable attachment means (8), means (5; 55, 56) being provided for moving said device manually.

2. A device according to claim 1, in which said walls (3a, 3b, 3c, 3d, 3e) comprise a base wall (3a) attached to said support (1).

3. A device according to claim 1 or 2, in which said walls (3a, 3b, 3c, 3d, 3e) comprise a plurality of side walls (3b, 3c, 3d, 3e), around which is arranged a band element so as to strengthen the connection between these walls (3b, 3c, 3d, 3e).

4. A device according to claim 3, in which said band element is of the same material as the walls (3b, 3c, 3d, 3e).

5. A device according to any one of the preceding claims, in which said releasable attachment means (8) comprise attachment strips with micro-hooks.

6. A device according to any one of the preceding claims, in which said walls (3a, 3b, 3c, 3d, 3e) and said support (1) have an outer covering.

7. A device according to claim 6, in which said walls (3a, 3b, 3c, 3d, 3e) are of foamed polyurethane covered with a polyvinyl and polyamide laminate.

8. A device according to claim 6 or 7, in which said support (1) is formed by high-strength resin-bonded plywood, covered with a polyvinyl and polyamide laminate.

9. A device according to any one of the preceding claims, in which said means of movement (5; 55, 56) comprise a noose or cable (5), secured to said support (1), for pulling the trolley.

10. A device according to any one of claims 1 to 8, in which said means of movement (5; 55, 56) comprise an elongated structure (51, 53, 55, 56) provided with a handle (56) and pivoting on a hinge (52, 54), said structure (51, 53, 55, 56) being arranged so that it can slide axially inside a guide (41) attached to said support (1), so that it is capable of assuming a first position, in which said structure (51, 53, 55, 56) is substantially enclosed inside said guide (41) except for the handle (56), and a second position, in which said structure (51, 53, 55, 56) extends for the most part outside said guide (41) so as to allow, by folding at the hinge (52, 54), a pulling action to be exerted on the handle (56).
